# FASCICULE DE BREVET EUROPEEN

(11) **EP 2 042 067 B1**
(45) Date de publication et mention de la délivrance du brevet: **09.11.2011**
(21) Numéro de dépôt: 08356128.2
(22) Date de dépôt: 23.09.2008
(51) Int. Cl.: A47J 45/06, A47J 45/08

(54) **Poignée d'article culinaire à structure evidée**
Griff eines Kochartikels mit ausgehöhlter Struktur
Cooking device handle with hollow structure

(30) Priorité: 27.09.2007 FR 0706770
(43) Date de publication de la demande: 01.04.2009
(73) Titulaire: Seb S.A., 69130 Ecully (FR)
(72) Inventeur: Pasquini, Ludovic, 74000 Annecy (FR)
(74) Mandataire: Kiehl, Hubert

(56) Documents cités:
- EP-A- 1 704 804
- DE-C- 597 085
- US-A- 5 867 867

## Description

La présente invention concerne une poignée pour un article culinaire tel qu'une casserole, une poêle, etc.

On connaît du document EP1704804 une poignée comportant une structure rigide et un organe de préhension entourant la structure. L'organe de préhension est réalisé dans une matière moins conductrice de la chaleur que la matière de la structure et a une forme ergonomique pour une bonne prise en main de la poignée. Toutefois, cette construction ne permet pas une déformation de l'organe de préhension nécessaire pour l'adaptation de la forme de l'organe de préhension à la forme de la main de l'utilisateur lors de la saisie et de la manipulation de la poignée.

Une autre poignée est connue du document US 5 867 867 A.

Le but de la présente invention est de remédier aux inconvénients précités et de proposer une poignée pour un article culinaire présentant une ergonomie optimisée combinant une adaptation de la forme de l'organe de préhension à la forme de la main de l'utilisateur.

Un autre but de l'invention est de proposer une poignée pour un article culinaire permettant une manipulation dudit article culinaire en toute sécurité en limitant la température de l'organe de préhension et en garantissant une bonne tenue de la poignée dans la main de l'utilisateur.

Un autre but de l'invention est de proposer une poignée pour un article culinaire qui soit de conception simple et économique à mettre en oeuvre.

Ces buts sont atteints avec une poignée d'article culinaire, adaptée à être saisie par une main d'un utilisateur, comportant une structure rigide reliée à l'article culinaire et un organe de préhension souple rapporté autour de la structure rigide du fait que la structure rigide comporte au moins une cavité exempte de matière et disposée directement sous l'organe de préhension, en face d'une zone d'appui de la main.

Par zone d'appui de la main, on comprend une zone de pression de la main sur la poignée du type pouce, paume, doigts.

Selon l'invention, lors de la saisie de la poignée par la main de l'utilisateur, on obtient une déformation de l'organe de préhension dans la cavité. Cette déformation permet une adaptation de la forme de la poignée à la forme de la main, ce qui améliore la prise en main de la poignée.

De préférence, la structure rigide comporte un corps de forme tubulaire.

Cette disposition permet d'avoir une forme de la poignée ergonomique et une structure simple et économique à mettre en ceuvre.

Cette disposition permet également, lors de la cuisson d'aliments dans l'article culinaire, de dissiper les calories amenées par la structure vers l'organe de préhension vers le centre de cette structure creuse. Ainsi la température de la poignée est limitée et la sécurité et le confort de l'utilisateur sont améliorés.

Avantageusement, l'organe de préhension est réalisé par injection et est rapporté par collage sur le corps de la structure rigide.

Cette disposition permet de réaliser un organe de préhension souple et de le fixer sur la structure rigide par des procédés faciles à industrialiser pour un coût de fabrication moindre.

De préférence, le corps de la structure rigide comporte une partie antérieure supérieure comprenant la cavité.

Cette disposition permet de réaliser une zone déformable face à l'appui du pouce lors de la saisie de la poignée par la main de l'utilisateur.

Cette disposition permet également d'avoir une zone d'appui du pouce avec un échauffement très faible, les calories n'étant amenées par la structure qu'à la périphérie de la cavité.

Avantageusement, le corps de la structure rigide comporte une partie inférieure comprenant deux cavités de forme allongées disposées selon un axe longitudinal de la poignée, de part et d'autre d'une bande de matière du corps.

Cette disposition permet d'obtenir deux zones de déformation situées face à l'extrémité de la paume de la main et la première, voire deuxième phalange des doigts.

De préférence, le corps de la structure comporte une partie antérieure inférieure comprenant une zone rigide en opposition à la cavité disposée dans sa partie antérieure supérieure.

Cette disposition permet d'obtenir un bon maintien de la poignée par l'appui de l'index sur une zone rigide face à la zone déformable d'appui du pouce.

Avantageusement, la cavité dans la partie antérieure supérieure du corps de la structure rigide a une forme oblongue.

Cette disposition permet d'adapter la forme de la zone déformable au plus près de la forme de l'appui du pouce.

Avantageusement, la matière de l'organe de préhension est un silicone résistant à la température.

Cette disposition permet de freiner la migration des calories vers la surface externe de l'organe de préhension et ainsi, d'avoir une température de l'organe de préhension qui reste basse et confortable pour l'utilisateur. On pourrait envisager d'autres matières de type élastomère ou mousse.

De préférence, l'organe de préhension comporte une paroi d'une épaisseur comprise entre 1 et 8 millimètres, de préférence 2 millimètres.

Avantageusement, la dureté shore de l'organe de préhension est comprise entre 30 et 50 shores, de préférence 40 shores.

Ces dispositions permettent d'obtenir un toucher de l'organe de préhension souple et doux et ainsi de procurer un grand confort d'utilisation.

Ces dispositions autorisent une déformation de la paroi de l'organe de préhension d'une valeur comprise entre 2 et 8 millimètres, ce qui permet d'obtenir une bonne adaptation de la forme de la poignée à la forme de la main.

L'invention sera mieux comprise à l'étude d'un mode de réalisation pris à titre nullement limitatif et illustré dans les figures annexées dans lesquelles :
- La figure 1 illustre une vue en perspective d'une poignée pour un article culinaire selon un mode particulier de réalisation de l'invention.
- La figure 2 illustre une vue éclatée en perspective de la poignée de la figure 1.
- La figure 3 illustre une vue en perspective du dessous de la structure rigide de la poignée de la figure 1.

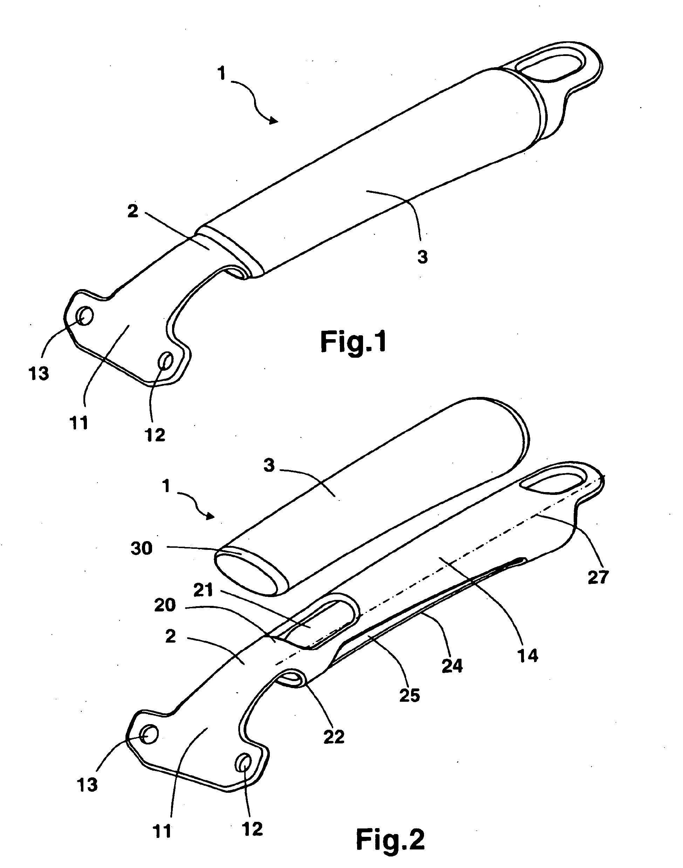

Tel que visible aux figures 1 à 3, la poignée 1 d'article culinaire comporte une structure rigide 2 et un organe de préhension 3 rapporté autour de la structure rigide 2.

La structure rigide 2 comprend une partie antérieure 11 adaptée à accoster une calotte d'article culinaire. La partie antérieure 11 comporte des moyens de fixation à la calotte, par exemple deux ouvertures 12, 13 permettant le passage de deux rivets.

A partir de la partie antérieure 11, la structure rigide 2 comprend un corps 14 de forme sensiblement tubulaire qui s'étend longitudinalement et qui comporte une ouverture à chacune de ses extrémités.

L'organe de préhension 3 a également une forme tubulaire et comporte une paroi 30 d'épaisseur sensiblement constante. L'organe de préhension 3 est réalisé par injection et rapporté par glissement autour du corps 14 de la structure rigide 2. Le maintien en place de l'organe de préhension 3 sur le corps 14 est assuré par collage. La matière de l'organe de préhension 3 est un silicone souple.

Le corps 14 comporte une partie antérieure supérieure 20 comprenant une cavité 21 exempte de matière et disposée longitudinalement, directement sous la paroi 30 de l'organe de préhension 3, en face de la zone d'appui du pouce de la main lors de la saisie de la poignée 1. La cavité 21 est de forme oblongue.

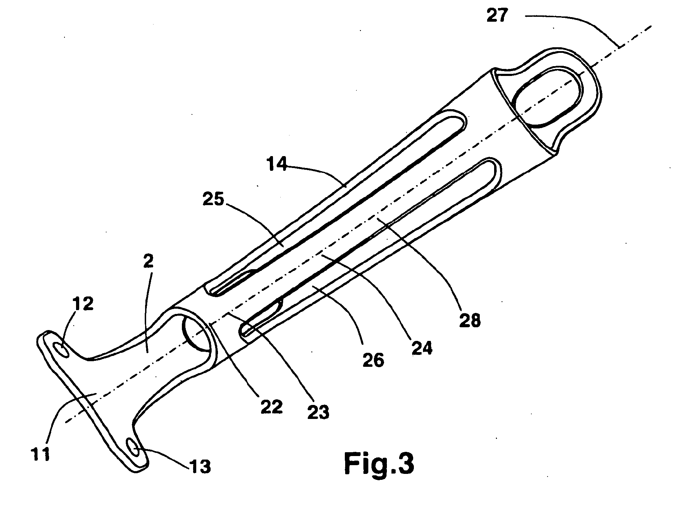

Le corps 14 de la structure 2 comporte une partie antérieure inférieure 22 comprenant une zone rigide 23 en opposition à la cavité 21 disposée dans sa partie antérieure supérieure 20 (fig. 2 et fig.3).

Le corps 14 de la structure rigide 2 comporte une partie inférieure 24 comprenant deux cavités 25, 26 de forme allongée disposées selon un axe longitudinal 27 de la poignée 1, de part et d'autre d'une bande de matière 28 du corps 14 (fig.3).

En fonctionnement, lors de la prise et de la manipulation de la poignée 1, la paroi de l'organe de préhension peut se déformer dans les cavités sous la pression des différentes parties de la main d'une valeur pouvant aller jusqu'à dix millimètres.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Poignée (1) d'article culinaire, adaptée à être saisie par une main d'un utilisateur, comportant une structure rigide (2) reliée à l'article culinaire et un organe de préhension (3) souple rapporté autour de la structure rigide (2) **caractérisée en ce que** la structure rigide (2) comporte au moins une cavité (21, 25, 26) exempte de matière et disposée directement sous l'organe de préhension (3), en face d'une zone d'appui de la main.

2. Poignée d'article culinaire selon la revendication 1, **caractérisée en ce que** la structure rigide (2) comporte un corps (14) de forme tubulaire.

3. Poignée d'article culinaire selon l'une quelconque des revendications 1 à 2, **caractérisée en ce que** l'organe de préhension (3) est réalisé par injection et est rapporté par collage sur le corps (14) de la structure rigide (2).

4. Poignée d'article culinaire selon l'une quelconque des revendications 1 à 3, **caractérisée en ce que** le corps (14) de la structure rigide (2) comporte une partie antérieure supérieure (20) comprenant la cavité (21).

5. Poignée d'article culinaire selon l'une quelconque des revendications 1 à 4, **caractérisée en ce que** le corps (14) de la structure rigide (2) comporte une partie inférieure (24) comprenant deux cavités (25, 26) de forme allongées disposées selon un axe longitudinal (27) de la poignée (1), de part et d'autre d'une bande de matière (28) du corps (14).

6. Poignée d'article culinaire selon l'une quelconque des revendications 4 à 5, **caractérisée en ce que** le corps (14) de la structure (2) comporte une partie antérieure inférieure (22) comprenant une zone rigide (23) en opposition à la cavité (21) disposée dans sa partie antérieure supérieure (20).

7. Poignée d'article culinaire selon l'une quelconque des revendications 4 à 6, **caractérisée en ce que** la cavité (21) dans la partie antérieure supérieure (20) du corps (14) de la structure rigide (2) a une forme oblongue.

8. Poignée d'article culinaire selon l'une quelconque des revendications 1 à 7, **caractérisée en ce que** la matière de l'organe de préhension (3) est un silicone résistant à la température.

9. Poignée d'article culinaire selon l'une quelconque des revendications 1 à 8, **caractérisée en ce que** l'organe de préhension (3) comporte une paroi (30) d'une épaisseur comprise entre 1 et 8 millimètres, de préférence 2 millimètres.

10. Poignée d'article culinaire selon l'une quelconque des revendications 1 à 9, **caractérisée en ce que** la dureté shore de l'organe de préhension (3) est comprise entre 30 et 50 shores, de préférence 40 shores.

## Claims

1. A cooking utensil handle (1), designed to be hand-held, comprising a rigid structure (2) connected to the cooking utensil and a flexible gripping component (3) connected around the rigid structure (2) **characterised in that** the rigid structure (2) comprises at least one cavity (21, 25, 26) free of material and arranged directly under the gripping component (3), facing the hand support zone.

2. A cooking utensil handle according to claim 1, **characterised in that** the rigid structure (2) has a tubular body (14).

3. A cooking utensil handle according to any one of claims 1 to 2, **characterised in that** the gripping component (3) is made by injection and is attached by bonding onto the body (14) of the rigid structure (2).

4. A cooking utensil handle according to any one of claims 1 to 3, **characterised in that** the body (14) of the rigid structure (2) has an upper front part (20) comprising the cavity (21).

5. A cooking utensil handle according to any one of claims 1 to 4, **characterised in that** the body (14) of the rigid structure (2) has a lower part (24) comprising two elongated cavities (25, 26) arranged along a longitudinal axis (27) of the handle (1), on either side of a material strip (28) of the body (14).

6. A cooking utensil handle according to any one of claims 4 to 5, **characterised in that** the body (14) of the rigid structure (2) has a lower front part (22) comprising a rigid zone (23) in opposition to the cavity (21) arranged in the upper front part (20) thereof.

7. A cooking utensil handle according to any one of claims 4 to 6, **characterised in that** the cavity (21) in the upper front part (20) of the body (14) of the rigid structure (2) has an oblong shape.

8. A cooking utensil handle according to any one of claims 1 to 7, **characterised in that** the gripping component (3) is made of heat-resistant silicone.

9. A cooking utensil handle according to any one of claims 1 to 8, **characterised in that** the gripping component (3) has a wall (30) with thickness between 1 and 8 millimetres, preferably 2 millimetres.

10. A cooking utensil handle according to any one of claims 1 to 9, **characterised in that** the Shore hardness of the gripping component (3) ranges between 30 and 50 shores, preferably 40 shores.

## Patentansprüche

1. Griff (1) eines Kochartikels, der angepasst ist, um mit einer Hand des Benutzers erfasst zu werden, umfassend eine starre Struktur (2), die mit dem Kochartikel verbunden ist, und ein biegsames Greifelement (3), das um die starre Struktur (2) herum angebracht ist, **dadurch gekennzeichnet, dass** die starre Struktur (2) mindestens eine Aushöhlung (21, 25, 26) aufweist, die frei von Material und direkt unter dem Greifelement (3) gegenüber einer Auflagefläche für die Hand angeordnet ist.

2. Griff eines Kochartikels nach Anspruch 1, **dadurch gekennzeichnet, dass** die starre Struktur (2) einen röhrenförmigen Körper (14) umfasst.

3. Griff eines Kochartikels nach einem der Ansprüche 1 bis 2, **dadurch gekennzeichnet, dass** das Greifelement (3) mittels Einspritzung hergestellt und durch Verkleben am Körper (14) der starren Struktur (2) angebracht wird.

4. Griff eines Kochartikels nach einem der Ansprüche 1 bis 3, **dadurch gekennzeichnet, dass** der Körper (14) der starren Struktur (2) einen oberen Vorderbereich (20) umfasst, der die Aushöhlung (21) aufweist.

5. Griff eines Kochartikels nach einem der Ansprüche 1 bis 4, **dadurch gekennzeichnet, dass** der Körper (14) der starren Struktur (2) einen unteren Bereich (24) umfasst, der zwei Aushöhlungen (25, 26) mit länglicher Form aufweist, die entlang einer Längsachse (27) des Griffes (1) auf beiden Seiten eines Materialstreifens (28) des Körpers (14) angeordnet sind.

6. Griff eines Kochartikels nach einem der Ansprüche 4 bis 5, **dadurch gekennzeichnet, dass** der Körper (14) der starren Struktur (2) einen unteren Vorderbereich (22) umfasst, der einen starren Abschnitt (23) gegenüber der Aushöhlung (21) aufweist, die in seinem oberen Vorderbereich (20) angeordnet ist.

7. Griff eines Kochartikels nach einem der Ansprüche 4 bis 6, **dadurch gekennzeichnet, dass** die Aushöhlung (21) im oberen Vorderbereich (20) des Körpers (14) der starren Struktur (2) einen längliche Form aufweist.

8. Griff eines Kochartikels nach einem der Ansprüche 1 bis 7, **dadurch gekennzeichnet, dass** das Material des Greifelements (3) ein temperaturbeständiges Silikon ist.

9. Griff eines Kochartikels nach einem der Ansprüche 1 bis 8, **dadurch gekennzeichnet, dass** das Greifelement (3) eine Wand (30) mit einer Dicke umfasst, die zwischen 1 und 8 Millimeter, vorzugsweise 2 Millimeter, beträgt.

10. Griff eines Kochartikels nach einem der Ansprüche 1 bis 9, **dadurch gekennzeichnet, dass** die Shore-Härte des Greifelements (3) zwischen 30 und 50 Shore, vorzugsweise 40 Shore, beträgt.
